Europäisches Patentamt

European Patent Office

Office européen des brevets

(11) Numéro de publication: **0 461 708 A1**

## (12) DEMANDE DE BREVET EUROPEEN

(21) Numéro de dépôt: 91201389.3

(22) Date de dépôt: 06.06.91

(51) Int. Cl.⁵: **H04N 11/16, H04N 7/00**

(30) Priorité: 12.06.90 FR 9007274

(43) Date de publication de la demande:
18.12.91 Bulletin 91/51

(84) Etats contractants désignés:
DE FR GB SE

(71) Demandeur: PHILIPS ELECTRONIQUE GRAND PUBLIC
51, Rue Carnot
F-92150 Suresnes(FR)
(84) FR

Demandeur: N.V. Philips'
Gloeilampenfabrieken
Groenewoudseweg 1
NL-5621 BA Eindhoven(NL)
(84) DE GB SE

(72) Inventeur: Hajj-Chehade, Mohamed
Société Civile S.P.I.D., 156, Boulevard Haussmann
FR-75008 Paris(FR)

(74) Mandataire: Caron, Jean et al
Société Civile S.P.I.D. 156, Boulevard Haussmann
F-75008 Paris(FR)

(54) Système de télévision mixte PAL/MAC.

(57) Le système utilise un procédé pour émettre un signal de télévision disponible en standard PAL sur un canal selon un système MAC. Pour émettre une ligne en PAL on conserve cette ligne telle quelle (Burst, W, T, G, M, R, B, N) à l'exception de l'impulsion de synchronisation, et on la transmet dans un système MAC après des données numériques MAC (Duobin), par exemple entre les temps d'horloge 236 et 1286, à la place des données analogiques multiplexées MAC.

Application: notamment dans des réseaux de télédiffusion.

FIG.1

La présente invention concerne un procédé pour émettre un signal de télévision disponible en standard PAL sur un canal selon un système MAC.

Elle concerne aussi un dispositif récepteur et un téléviseur pour un tel signal.

Un tel système s'applique notamment dans des réseaux de télédiffusion. Le système PAL est encore promis à un long avenir en parallèle avec le système MAC, du fait de la simplicité de son codage/décodage et aussi parce que les supports de transmission terrestres ainsi que ceux sur cable ne sont pas encore tous adaptés au standard MAC. Les fournisseurs de programmes disposent en outre d'un stock important de programmes en PAL et souhaitent éviter de devoir les transcoder.

L'invention se propose de permettre la diffusion de programmes en PAL par le biais de canaux en MAC, sans pour autant qu'on ait à reprendre le stock de programmes pour le convertir en standard MAC.

L'invention est basée sur la constatation que la bande passante prévue pour les parties analogiques d'un signal MAC permet de passer correctement un signal PAL y compris sa sous-porteuse, d'où l'idée de conserver telles quelles au moins les données de synchronisation MAC pour qu'elles puissent être exploitées par un décodeur MAC ordinaire, et de remplacer une partie des données MAC subséquentes par des données analogiques PAL.

Ainsi un procédé selon l'invention est remarquable, dans une première variante, en ce que pour émettre une ligne en PAL on conserve cette ligne telle quelle à l'exception de l'impulsion de synchronisation, on la transmet après les données numériques MAC inchangées, à la place des données analogiques multiplexées MAC, et on abandonne les données MAC qui resteraient à transmettre à la fin de la ligne.

Dans une seconde variante, un procédé selon l'invention est remarquable en ce que pour émettre une ligne en PAL on conserve cette ligne telle quelle à l'exception de l'impulsion de synchronisation et on la transmet, au moins 55 microsecondes avant la fin d'une ligne MAC, à la place des données suivantes normalement prévues en MAC, le reste des données numériques MAC restant à transmettre normalement dans la ligne étant donc supprimé.

Dans une troisième variante, un procédé selon l'invention est remarquable en ce que pour émettre une ligne en PAL on conserve cette ligne telle quelle à l'exception de l'impulsion de synchronisation, on la comprime temporellement pour en obtenir une durée d'au plus 34,4 microsecondes, et on la transmet ainsi comprimée à la place des données analogiques de luminance de la ligne MAC. Malgré la compression qui augmente les fréquences, la sous-porteuse PAL peut encore tenir dans la bande passante prévue pour le MAC.

Toutefois, une impulsion de synchronisation PAL classique peut être logée dans un champ de données éventuellement inutilisé du signal MAC, le procédé restant par ailleurs conforme à la description ci dessus. Ceci facilite la synchronisation d'un décodeur MAC utilisant, pour démarrer la synchronisation, les niveaux de crête du signal émis.

Ces trois variantes du procédé ont en outre l'avantage important qu'elles permettent au moindre coût l'utilisation des procédés d'embrouillage prévus normalement pour le MAC, notamment le procédé dit "Eurocrypt" prévu pour le D2-MAC/PAQUETS, qui sont beaucoup plus performants que tous les procédés actuellement implantés pour le PAL.

Il est avantageux d'utiliser les signaux de synchronisation d'un signal MAC et aussi certaines des données d'information MAC, telles que des données d'accès conditionnel, des données de la ligne 624 ou 625, des données de voie sonore, ce qui a l'avantage de permettre l'exploitation d'un signal PAL avec plus de possibilités que le PAL classique ne le permet, en se rapprochant des avantages que le système MAC peut offrir. Cela permet notamment de réaliser un décodeur bistandard bon marché.

Un dispositif récepteur pour un signal émis selon le procédé de l'invention est remarquable en ce qu'il comporte un décodeur PAL auquel est amené, via un interrupteur, le signal reçu à exploiter et un décodeur MAC auquel est aussi amené le signal reçu à exploiter et dont la sortie d'horloge est reliée à l'entrée d'un circuit de base de temps qui commande le susdit interrupteur pour le fermer pendant le temps où un signal PAL est présent et qui est relié à un circuit générateur de signal de synchronisation PAL.

Dans une variante, un tel dispositif récepteur est remarquable en ce qu'il comporte un circuit d'expansion temporelle auquel est amené, via un interrupteur, le signal reçu à exploiter et dont la sortie est reliée à l'entrée d'un décodeur PAL, un décodeur MAC auquel est aussi amené le signal reçu à exploiter et dont la sortie de signaux de sychronisation est reliée à l'entrée d'un circuit de base de temps qui commande le susdit interrupteur pour le fermer pendant le temps où le signal PAL comprimé est présent et qui est relié à un circuit générateur de signal de synchronisation PAL.

Le surcoût d'un tel dispositif est limité puisque presque tous ses éléments sont standard, les seuls éléments additionnels étant l'interrupteur, le circuit de base de temps, et le circuit générateur de signal de synchronisation PAL.

Un récepteur de télévision est avantageusement muni d'un dispositif récepteur selon l'invention.

La description qui va suivre, en regard des dessins annexés décrivant des exemples non limitatifs fera bien comprendre comment l'invention peut être réalisée.

Les figures 1 à 3 représentent chacune schématiquement une ligne de télévision selon une variante de l'invention.

La figure 4 est un diagramme d'une partie d'un récepteur selon une première variante de l'invention.

La figure 5 est un diagramme d'une partie d'un récepteur selon une seconde variante de l'invention.

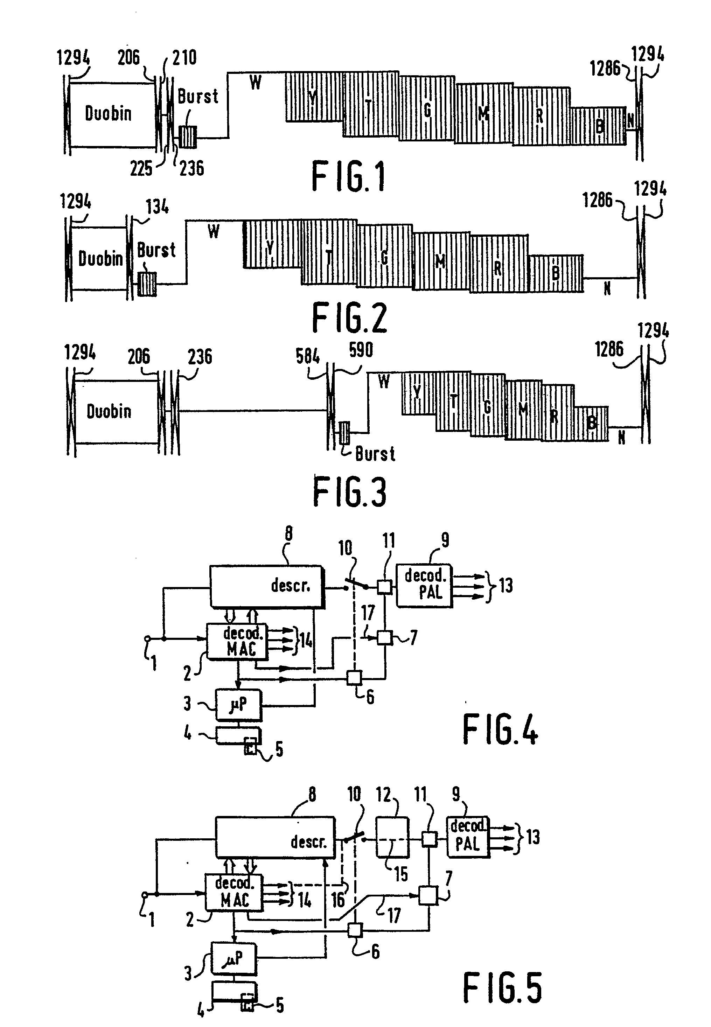

Sur les figures 1 à 3, les chiffres indiquent les temps d'horloge dans le standard D2-MAC/PAQUETS. Ce standard est pris ici comme exemple, mais l'invention pourrait aussi s'appliquer à d'autres standards MAC.

Selon une première variante du procédé de l'invention, représentée à la figure 1, la ligne commence selon le standard D2-MAC/PAQUETS normal par une séquence "Duobin" de données numériques en codage duobinaire entre le temps d'horloge 1294 et le temps d'horloge 206, suivie d'une zone de transition entre le temps d'horloge 206 et le temps d'horloge 210, d'un palier d'alignement entre le temps d'horloge 206 et le temps d'horloge 225, et d'une nouvelle zone de transition entre le temps d'horloge 225 et le temps d'horloge 236. Après le temps d'horloge 236, le signal D2-MAC est remplacé par un signal PAL, dont la salve suivant l'impulsion de synchronisation de ligne est conservée. Les lignes concernées par cette opération sont les lignes 24 à 310 d'une part et les lignes 336 à 622 d'autre part, c'est à dire celles qui sont normalement porteuses d'une information analogique de description d'une ligne.

Le signal PAL est un signal composite, c'est à dire avec sa sous-porteuse couleur. Pour illustrer la ligne, on a choisi de représenter une ligne de mire de barres classique : on trouve ainsi successivement la salve de mise en phase "Burst", puis les signaux produisant les barres de couleurs blanche, jaune, turquoise, verte, mauve, rouge, bleue, et noire référencées W, Y, T, G, M, R, B. La barre de couleur noire est raccourcie du fait que le temps disponible n'est pas suffisant pour une ligne PAL complète : entre le temps d'horloge 236 et le temps d'horloge 1286, il y a 1050 périodes soit 51,85 microsecondes, alors que la partie d'une ligne PAL qui suit l'impulsion de synchronisation dure 56,9 microsecondes. Cette première variante de l'invention a donc l'inconvénient de perdre une bande verticale étroite à droite de l'image. Toutefois, cette bande a la même largeur à peu près que celle qui est perdue lors de l'embrouillage par le procédé à retards variables dit "Discret 1", ce qui est tolérable.

Afin d'éviter cet inconvénient, dans une seconde variante du procédé de l'invention, la ligne représentée à la figure 2 commence selon le standard D2-MAC/PAQUETS normal par une séquence "Duobin" de données numériques en codage duobinaire qui commence au temps d'horloge 1294 mais se termine plus tôt que ne le prévoit la norme MAC, car une ligne en PAL (dont la salve suivant l'impulsion de ligne et le reste de la ligne sont conservés) est alors transmise, au moins 55 microsecondes avant la fin de la ligne MAC, à la place des données suivantes normalement prévues en MAC, le reste des données numériques MAC restant à transmettre normalement dans la ligne étant donc supprimé.

La zone de données numériques se termine par exemple par une zone de transition qui finit au temps d'horloge 134. Ceci laisse une durée de 1286-134 = 1152 périodes d'horloge avant la fin de la ligne MAC, ce qui correspond exactement à la durée nécessaire pour une ligne en PAL dont seule la partie suivant l'impulsion de synchronisation de ligne est conservée. Cette durée est un peu supérieure à celle de 55 microsecondes mentionnée ci-dessus, parceque 55 microsecondes constituent en fait une limite extrême obligeant à raccourcir la salve de synchronisation de porteuse couleur PAL. Il est préférable en pratique de transmettre cette salve en entier. Au temps d'horloge 134 commence la ligne PAL, complète à l'exception de l'impulsion de synchronisation de ligne. Comme ci-dessus, on a représenté une ligne d'une mire de barres classique : on trouve ainsi successivement la salve de mise en phase "Burst", puis les signaux produisant les barres de couleurs blanche, jaune, turquoise, verte, mauve, rouge, bleue, et noire référencées W, Y, T, G, M, R, B. La barre de couleur noire est ici complète. Par contre les données numériques MAC sont amputées d'une partie, ce qui n'est pas rédhibitoire car les données MAC de synchronisation de ligne sont situées tout au début de la ligne et donc ne sont pas affectées et il y a des données numériques qui peuvent être supprimées sans inconvénient, sans pour autant empêcher de transmettre en plus des signaux PAL certaines des données d'information MAC, telles que des données d'accès conditionnel, des données de la ligne 624 ou 625, des données de voie sonore, etc. Néanmoins le palier d'alignement de ligne n'existe plus, et ceci peut présenter un inconvénient si le récepteur utilise ce palier notamment dans le circuit de génération de la synchronisation.

Dans une troisième variante du procédé de l'invention, la ligne représentée à la figure 3 commence selon le standard D2-MAC PAQUETS normal, ceci depuis le temps d'horloge 1294 jusqu'à la fin de la zone réservée au signal analogique de chrominance, qui se termine par une zone de transition entre les temps d'horloge 584 et 590. Après le temps d'horloge 590, le signal D2-MAC est remplacé par un signal PAL, dont la salve suivant l'impulsion de synchronisation de ligne et le reste de la ligne sont conservés, ce signal étant en outre comprimé temporellement pour durer au maximum 34,4 microsecondes. La sous-porteuse PAL dont la fréquence au départ est de 4,43 MHz se trouve multipliée par le rapport des temps alloués pour la transmission, soit 56,9 / 34,4 (durée normale / durée comprimée), ce qui amène à une fréquence de 7,34 MHz, dont la transmission par le canal MAC (bande passante = 8,4 MHz) est encore possible. Comme ci-dessus, on a représenté une ligne de mire de barres classique : on trouve ainsi successivement la salve de mise en phase "Burst", puis les signaux produisant les barres de couleurs blanche, jaune, turquoise, verte, mauve, rouge, bleue, et noire référencées W, Y, T, G, M, R, B. La barre de couleur noire est ici complète, et les données numériques MAC également. Cette variante nécessite des opérations supplémentaires pour la compression et l'expansion temporelles du signal PAL, mais le surcoût est marginal puisque, comme on le verra plus loin, les équipements nécessaires sont déja présents dans le matériel MAC.

Dans les trois variantes du procédé, les mots de retour de trame, ainsi que les codes indiquant la nature de l'émission et les codes de définition de l'embrouillage éventuel, qui sont placés dans des lignes correspondant au retour de trame (notamment les lignes 624, 625), ne sont pas affectés par la modification des lignes d'image.

Le son, dont la porteuse en PAL est écartée de 5,5 MHz ou 6 MHz de la fréquence image, ne peut pas être associé ici à la porteuse image, parce qu'elle est découpée en tranches, et aussi parce que dans la troisième variante, la fréquence transposée de la porteuse son serait trop élevée. En conséquence le son doit être converti en son MAC et transmis normalement en MAC.

Un récepteur, par exemple un téléviseur, apte à recevoir une émission réalisée selon l'une des deux premières variantes ci-dessus est équipé d'un dispositif représenté schématiquement à la figure 4. Le signal à exploiter (en bande de base) est reçu sur une entrée 1 et amené, via un interrupteur 10 (et des éléments 8 et 11 décrits plus loin), à un décodeur PAL 9. Ce signal est aussi amené à un décodeur MAC référencé 2 dans lequel est généré un signal de synchronisation, dérivé de la "synchro-composite", qui est amené à l'entrée d'un circuit de base de temps 6 qui commande le susdit interrupteur 10 pour le fermer pendant le temps où un signal PAL est présent. Le circuit de base de temps 6 est aussi relié à un circuit 7 générateur de signal de synchronisation PAL. L'interrupteur 10 est un interrupteur analogique électronique.

Pour permettre l'utilisation d'un embrouillage de type MAC, selon lequel des segments de ligne sont intervertis aléatoirement, un désembrouilleur 8 est disposé entre l'entrée 1 et l'interrupteur 10. Le décodeur MAC est relié à un microprocesseur 3 pour lui fournir toutes les données de désembrouillage qui sont transmises par l'antenne. Il peut aussi être fait usage d'une carte électronique dite "carte à puce" 5 avec un module 4 de lecture et de traitement des données de cette carte, qui contient des données complémentaires de cryptage pour la sécurité du désembrouillage. Le désembrouilleur proprement dit 8, à partir des instants de coupure qui lui sont indiqués par le microprocesseur 3 associé au module de traitement 4, replace dans l'ordre initial les segments de lignes intervertis et donc remet le signal sous une des formes représentées aux figures 1 ou 2. Les éléments 3, 4, 5, 8 et leur interconnexion constituant un tel désembrouilleur sont tous connus de l'homme du métier.

Les données spécifiques de l'embrouillage, notamment les mots dits EMM et ECM (messages de gestion et de contrôle des titres d'accès) sont placés de préférence au début des lignes 314 à 334 ou au début des lignes 2 à 22.

Le fonctionnement de cet ensemble est facile à comprendre : a partir de l'horloge fournie par le décodeur 2 le circuit de base de temps 6 détermine les instants numérotés 236 ou 134 sur les figures 1 ou 2 respectivement, et à cet instant il ferme l'interrupteur 10. Il détermine aussi l'instant numéroté 1286 et à cet instant il ouvre l'interrupteur 10. Le signal étant remis sous l'une des formes représentées aux figures 1 ou 2, les parties comprises entre les temps 236 et 1286 (figure 1) ou 134 et 1286 (figure 2) sont transmises par l'interrupteur. Environ cinq à six microsecondes (théoriquement 5,6) avant le début de la salve de synchronisation de porteuse PAL, c'est à dire par exemple aux instants numérotés 123 ou 21 sur les figures 1 et 2 respectivement, le circuit 6 fournit un top au circuit 7 qui peut comporter par exemple un circuit monostable pour générer à partir dudit top une impulsion de synchronisation ligne de type PAL. Au lieu d'un circuit monostable le circuit 7 peut aussi être un circuit numérique qui compte des temps d'horloge. L'impulsion de synchronisation de type PAL est fournie à un circuit additionneur analogique 11 qui est placé sur le trajet du signal entre l'interrupteur 10 et le décodeur PAL 9 pour insérer l'impulsion de synchronisation dans le signal. Par une connexion 17 le décodeur MAC indique l'instant de synchronisation trame, à partir duquel le circuit générateur de synchronisation PAL engendre une impulsion de trame PAL qui est insérée au bon moment dans le signal par le circuit additionneur 11. On pourrait aussi utiliser des signaux de "synchro-composite" délivrés par le décodeur MAC, à condition d'ajuster les retards par rapport au signal transmis. Le signal devient ainsi un signal PAL complet avant d'être introduit dans le décodeur PAL 9. Ce dernier fournit sur des sorties 13 les signaux dits R, V, B nécessaires à l'affichage d'une image.

Le décodeur MAC 2, dans le cas où l'émission est une émission MAC standard, fournit sur des sorties 14 des signaux dits R, V, B pour l'affichage d'une image. Ainsi, en fonction du type d'émission, il est possible de prélever les signaux pour l'affichage d'une image, soit sur les sorties 13, soit sur les sorties 14.

Le dispositif de la figure 5 est le même que celui de la figure 3 à la seule exception qu'un circuit d'expansion temporelle 12 est inséré entre l'interrupteur 10 et le décodeur PAL 9. Ce circuit traite des signaux du type représenté à la figure 3. Le circuit de base de temps 6 détermine l'instant numéroté 590 sur la figures 3 et à cet instant il ferme l'interrupteur 10. Il détermine aussi l'instant numéroté 1286 et à cet instant il ouvre l'interrupteur 10. Le signal étant ainsi remis sous la forme représentée sur la figures 3, la partie du signal comprise entre les temps 590 et 1286 est transmise par l'interrupteur au circuit d'expansion temporelle 12 dans lequel la durée qui était de 34,4 microsecondes passe à 56,9 microsecondes. L'impulsion de synchronisation de type PAL est alors ajoutée par l'additionneur analogique 11 comme dans le dispositif de la figure 4. du signal comprise entre les temps 590 et 1286 est transmise par l'interrupteur au circuit d'expansion temporelle 12 dans lequel la durée qui était de 34,4 microsecondes passe à 56,9 microsecondes. L'impulsion de synchronisation de type PAL est alors ajoutée par l'additionneur analogique 11 comme dans le dispositif de la figure 4.

Le circuit d'expansion 12 est connu de l'homme du métier puisqu'un circuit du même type est utilisé dans le décodage d'un signal MAC pour l'expansion des composantes analogiques multiplexées temporellement. Il est même possible d'utiliser le propre circuit d'expansion du décodeur MAC puisque ce dernier est justement prévu pour réaliser l'expansion de la partie de ligne entre les temps 590 et 1286. La valeur du coefficient d'expansion utilisé n'est pas rigoureusement celle désirée pour la présente application, mais elle est néanmoins assez peu différente de l'idéal pour pouvoir être utilisée. Si à l'émission les données de couleur comprises entre les temps 236 et 584 de la ligne MAC sont mises à zéro, les signaux R, V, B présents aux sorties 14 sont tous semblables (à l'amplitude près) et on peut choisir le signal "bleu" par exemple pour représenter le signal PAL. Ce dernier est donc alors tout simplement extrait à partir de l'une des sorties 14 du décodeur MAC, ce qui est illustré par les pointillés 16 et 15 sur la figure 5 selon lesquels une liaison est établie directement entre une des sorties 14 du décodeur 2 et l'entrée de l'additionneur 11, toujours bien entendu via l'interrupteur 10. Alors les instants de fermeture de l'interrupteur doivent être modifiés par rapport à ce qui a été décrit plus haut, de manière à les adapter à l'instant où le signal expansé apparaît sur la sortie 14, ce qui peut facilement être fait là encore par détection des temps d'horloge particuliers correspondants.

**Revendications**

1. Procédé pour émettre un signal de télévision disponible en standard PAL sur un canal selon un système MAC, caractérisé en ce que pour émettre une ligne en PAL on conserve cette ligne telle quelle à l'exception de l'impulsion de synchronisation, on la transmet après les données numériques MAC inchangées, à la place des données analogiques multiplexées MAC, et on abandonne les données MAC qui resteraient à transmettre à la fin de la ligne.

2. Procédé pour émettre un signal de télévision disponible en standard PAL sur un canal selon le système MAC, caractérisé en ce que pour émettre une ligne en PAL on conserve cette ligne telle quelle à l'exception de l'impulsion de synchronisation et on la transmet, au moins 55 microsecondes avant la fin d'une ligne MAC, à la place des données suivantes normalement prévues en MAC, le reste des données numériques MAC restant à transmettre normalement dans la ligne étant donc supprimé.

3. Procédé pour émettre un signal de télévision disponible en standard PAL sur un canal selon le système MAC, caractérisé en ce que pour émettre une ligne en PAL on conserve cette ligne telle quelle à l'exception de l'impulsion de synchronisation, on la comprime temporellement pour en obtenir une durée d'au plus 34,4 microsecondes, et on la transmet ainsi comprimée à la place des données analogiques de luminance de la ligne MAC.

4. Procédé selon la revendication 3, caractérisé en ce qu'on met à zéro les données de couleur de la ligne MAC.

5. Procédé selon l'une quelconque des revendications précédentes, caractérisé en ce qu'on utilise les signaux de synchronisation d'un signal MAC et aussi certaines des données d'information MAC.

6. Procédé selon l'une quelconque des revendications précédentes, caractérisé en ce qu'on loge une impulsion de synchronisation PAL classique dans un champ de données éventuellement inutilisé du signal MAC.

7. Dispositif récepteur pour un signal émis selon le procédé de l'une des revendication 1 ou 2, caractérisé en ce qu'il comporte un décodeur PAL auquel est amené, via un interrupteur, le signal reçu à exploiter et un décodeur MAC auquel est aussi amené le signal reçu à exploiter et qui engendre un signal de synchronisation qui est amené à l'entrée d'un circuit de base de temps qui commande le susdit interrupteur pour le fermer pendant le temps où un signal PAL est présent et qui est relié à un circuit générateur de signal de synchronisation PAL.

8. Dispositif récepteur pour un signal émis selon le procédé de la revendication 3, caractérisé en ce qu'il comporte un circuit d'expansion temporelle auquel est amené, via un interrupteur, le signal reçu à exploiter et dont la sortie est reliée à l'entrée d'un décodeur PAL, et un décodeur MAC auquel est aussi amené le signal reçu à exploiter et dont la sortie d'horloge est reliée à l'entrée d'un circuit de base de temps, qui commande le susdit interrupteur pour le fermer pendant le temps où un signal PAL comprimé est présent, et qui est relié à un circuit générateur de signal de synchronisation PAL.

9. Dispositif récepteur selon l'une des revendications 7 ou 8, caractérisé en ce qu'il comporte un circuit de désembrouillage de type MAC entre l'entrée de signal à traiter et l'interrupteur.

10. Récepteur de télévision muni d'un dispositif récepteur selon l'une des revendications 7 à 9.

FIG.1

FIG.2

FIG.3

FIG.4

FIG.5

# RAPPORT DE RECHERCHE EUROPEENNE

Numéro de la demande

**EP 91 20 1389**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | SYMPOSIUM RECORD, CATV SESSIONS, 16TH INTERNATIONAL TV SYMPOSIUM, Montreux, 17-22 juin 1989, pages 476-483; C. JOHNSON: " D2-MAC packet in european cable networks"<br>* Page 479, paragraphe 5; page 480, paragraphe 1 *<br>– – – | 1 | H 04 N 11/16<br>H 04 N 7/00 |
| A | EP-A-0 338 915   (ETAT FRANCAIS)<br>– – – – – | | |

| | DOMAINES TECHNIQUES RECHERCHES (Int. Cl.5) |
|---|---|
| | H 04 N |

Le présent rapport de recherche a été établi pour toutes les revendications

| Lieu de la recherche | Date d'achèvement de la recherche | Examinateur |
|---|---|---|
| La Haye | 23 août 91 | PIGNIEZ T.J.P. |